(19) Europäisches Patentamt / European Patent Office / Office européen des brevets

(11) **EP 3 320 973 A1**

(12) **EUROPEAN PATENT APPLICATION**
published in accordance with Art. 153(4) EPC

(43) Date of publication:
**16.05.2018 Bulletin 2018/20**

(51) Int Cl.:
*B01J 37/04* (2006.01)   *B01D 53/94* (2006.01)
*B01J 29/46* (2006.01)   *B01J 37/00* (2006.01)
*B01J 37/08* (2006.01)   *B01J 37/30* (2006.01)
*F01N 3/022* (2006.01)   *F01N 3/035* (2006.01)

(21) Application number: 16821190.2

(22) Date of filing: **14.06.2016**

(86) International application number:
**PCT/JP2016/067672**

(87) International publication number:
**WO 2017/006720 (12.01.2017 Gazette 2017/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.07.2015 JP 2015137042**

(71) Applicant: **Otsuka Chemical Holdings Co., Ltd.**
**Osaka-shi, Osaka 540-0021 (JP)**

(72) Inventors:
• **UETANI, Masatoshi**
  **Tokushima-shi**
  **Tokushima 771-0193 (JP)**
• **MISHIMA, Takahiro**
  **Tokushima-shi**
  **Tokushima 771-0193 (JP)**

(74) Representative: **Ter Meer Steinmeister & Partner**
**Patentanwälte mbB**
**Nymphenburger Straße 4**
**80335 München (DE)**

(54) **METHOD FOR PRODUCING EXHAUST GAS PURIFYING FILTER, EXHAUST GAS PURIFYING FILTER, AND EXHAUST GAS PURIFICATION DEVICE**

(57) Provided is a method for producing an exhaust gas purifying filter that enables a catalyst to be supported on an exhaust gas purifying filter in a simple manner without the need for impregnation with or application of a solution containing catalyst particles after the production of the exhaust gas purifying filter and also enables an exhaust gas purifying filter having a high NOx reduction efficiency to be obtained. The method includes the steps of: extruding a mixture containing zeolite and raw material particles of a support to prepare a green body; firing the green body to prepare a sintered body; treating the sintered body with alkali under a condition at pH 9.5 or more; and exchanging an element at an ion-exchange site of the zeolite contained in the alkali-treated sintered body with a transition metal.

**Description**

Technical Field

This invention relates to methods for producing exhaust gas purifying filters, exhaust gas purifying filters, and exhaust gas purification devices.

Background Art

Exhaust gases discharged from an internal combustion engine, such as a diesel engine, contain toxic components, including particulate matter (PM), nitrogen oxides (NOx), hydrocarbon, and carbon monoxide. Various approaches are being taken to remove these toxic substances. In particular, NOx and PM discharged from diesel vehicles, such as trucks and buses, contribute to air pollution in urban areas and, therefore, controls on these toxic substances have been increasingly tightened.

PM is removed by, for example, a method of collecting PM on a filter placed in a flow path of exhaust gases and, upon deposition of a predetermined amount of PM thereon, applying heat to the filter to decompose PM by combustion. However, the combustion temperature of PM is as high as 550 to 650°C, which presents a problem that a device for purifying exhaust gases increases in size and a problem that the energy cost for application of heat becomes high. To combust PM at lower temperatures, a honeycomb filter with a catalyst supported thereon is used. Patent Literature 1 proposes, as such a catalyst, composite oxide particles containing Si and Zr.

NOx is removed by a NOx reduction catalyst supported on a filter placed in a flow path of exhaust gases. For example, there is selective catalytic reduction (SCR) in which a zeolite-based catalyst is supported on a filter and a reductant obtained from an ammonia precursor, such as urea, or ammonia itself is injected into the filter to reduce NOx to nitrogen.

To remove PM and NOx, it is necessary to dispose a device for removing NOx downstream of a device for removing PM, because deposition of PM on the NOx reduction catalyst reduces the NOx reduction efficiency. However, as a request for downsizing from the market, there is demand for a device in which the device for removing PM and the device for removing NOx are integrated together.

To cope with this, Patent Literature 2 proposes to coat a wall surface of a wall-flow filter with a NOx reduction catalyst layer made of a NOx reduction catalyst and further coat the NOx reduction catalyst layer with an oxidation catalyst layer made of an oxidation catalyst.

Meanwhile, an exhaust gas purifying filter obtained by mixing aluminum titanate or so on, which is raw material particles for a support, with catalyst particles for combusting PM, forming the mixture into a filter shape, and then sintering the mixture is known to suppress the increase in pressure loss due to deposition of PM and thus increase the PM removal efficiency. For example, Patent Literature 3 proposes an exhaust gas filter in which aluminum titanate particles with a catalyst raw material adhering to the surfaces thereof are formed and sintered.

Citation List

Patent Literature

Patent Literature 1: WO2013/136991
Patent Literature 2: JP-A-2000-282852
Patent Literature 3: WO2012/046577

Summary of Invention

Technical Problem

However, in Patent Literature 2, pores in the filter wall surface are occluded by the formed catalyst layers. Thus, there arises a problem that the previously interconnected pores are separated from each other to reduce the flow path of exhaust gases, resulting in increased pressure loss due to the deposition of PM and reduced PM and NOx removal efficiencies. Zeolite-based catalysts, which are NOx reduction catalysts, have low thermal resistance and therefore have a problem that, upon application of the same method as in Patent Literature 3, the zeolite-based catalysts are thermally degraded.

An object of the present invention is to provide: a method for producing an exhaust gas purifying filter that enables a catalyst to be supported on an exhaust gas purifying filter in a simple manner without the need for impregnation with or application of a solution containing catalyst particles after the production of the exhaust gas purifying filter and also enables an exhaust gas purifying filter having a high NOx reduction efficiency to be obtained; an exhaust gas purifying filter obtained by the method for producing an exhaust gas purifying filter; and an exhaust gas purification device including the filter.

Solution to Problem

The present invention provides the following method for producing an exhaust gas purifying filter, the following exhaust gas purifying filter, and the following exhaust gas purification device.

Aspect 1: A method for producing an exhaust gas purifying filter, the method including the steps of: extruding a mixture containing zeolite and raw material particles of a support to prepare a green body; firing the green body to prepare a sintered body; treating the sintered body with alkali under a condition at pH 9.5 or more; and exchanging an element at an ion-exchange site of the zeolite contained in the alkali-treated sintered body with a transition metal.

Aspect 2: The method for producing an exhaust gas purifying filter according to aspect 1, wherein the zeolite is contained as a catalyst capable of reducing nitrogen oxides to nitrogen.

Aspect 3: The method for producing an exhaust gas purifying filter according to aspect 1 or 2, wherein the zeolite is at least one selected from mordenite zeolite, faujasite zeolite, zeolite A, zeolite L, zeolite β, and ZSM-5 zeolite.

Aspect 4: The method for producing an exhaust gas purifying filter according to any one of aspects 1 to 3, wherein the raw material particles of the support are aluminum titanate.

Aspect 5: The method for producing an exhaust gas purifying filter according to any one of aspects 1 to 4, wherein the green body is a green body of a honeycomb filter.

Aspect 6: An exhaust gas purifying filter produced by the method for producing an exhaust gas purifying filter according to any one of aspects 1 to 5.

Aspect 7: An exhaust gas purification device including the exhaust gas purifying filter according to aspect 6.

Advantageous Effects of Invention

According to the present invention, a catalyst can be supported on an exhaust gas purifying filter in a simple manner without the need for impregnation with or application of a solution containing catalyst particles after the production of the exhaust gas purifying filter and NOx can be removed by reduction with high efficiency.

Description of Embodiments

Hereinafter, a description will be given of an example of a preferred embodiment for working of the present invention. However, the following embodiment is simply illustrative. The present invention is not at all intended to be limited to the following embodiment.

A method for producing an exhaust gas purifying filter according to the present invention includes the steps of: extruding a mixture containing zeolite and raw material particles of a support to prepare a green body; firing the green body to prepare a sintered body; treating the sintered body with alkali under a condition at pH 9.5 or more; and exchanging an element at an ion-exchange site of the zeolite contained in the alkali-treated sintered body with a transition metal.

The support of the exhaust gas purifying filter is not particularly limited in shape so long as it has a filtration function and conventionally known supports can be used as the support of the exhaust gas purifying filter. An example of the support is a honeycomb filter. Specifically, a wall-flow honeycomb filter made of ceramic is preferably used.

Examples of preferred usable raw material particles of the support made of ceramic material include silicon carbide, cordierite, mullite, alumina, and aluminum titanate and aluminum titanate is more preferred from the viewpoint of thermal resistance and stability. Furthermore, a sintering aid, such as talc, silicon oxide, mullite, an alkali oxide or an alkaline-earth oxide, may be appropriately added to the ceramic raw material particles.

In the case of the wall-flow honeycomb filter, no particular limitation is placed on the number of cells and the wall thickness, but the number of cells is preferably 200 to 400 cells per square inch and the wall thickness is preferably 200 to 380 μm. Although there is no particular limitation as to the type of the cell wall surface except that it is porous, the cell wall preferably has pores with a long diameter (pore diameter) of about 8 to 18 μm and the porosity is preferably 45 to 65%.

Zeolite is a crystalline aluminosilicate and a porous body having a crystal structure in which four oxygen elements are regularly three-dimensionally arranged around and bonded to each of a silicon element and an aluminum element. Examples of the crystal structure of the zeolite for use in the present invention include mordenite zeolite, faujasite zeolite, zeolite A, zeolite L, zeolite β, and ZSM-5 zeolite.

The zeolite for use in the present invention has a silica to alumina ratio of preferably 15 or more and more preferably 20 or more. The upper limit of the silica to alumina ratio is preferably 100 and more preferably 50. The use of this composition is preferred because it can be considered that NOx can be removed by reduction without being influenced by alkali metal ions eluted from other additives.

Zeolites that can be used in the present invention include natural zeolites and synthetic zeolites, but those having the above composition can be used without any other particular limitation. The preferred are synthetic zeolites because they have more uniform silica to alumina ratio, crystal size, and crystalline form and contain less impurities.

The mixture containing the zeolite and the raw material particles of the support can be controlled, for example, by adding thereto a pore-forming agent, a binder, a dispersant, and water. The zeolite is mixed in an amount of preferably 1 to 40 parts by mass, more preferably 1 to 30 parts by mass, with 100 parts by mass of the raw material particles of the support.

The mixture may contain, as necessary, a catalyst capable of combusting PM. Thus, an exhaust gas purifying filter can be obtained which can satisfy both of the function of removing PM and the function of removing NOx and also can solve the problem of increase in pressure loss.

Any catalyst capable of combusting PM can be used without particular limitation insofar as it is not thermally degraded at a firing temperature for the raw material particles of the support. Examples of the catalyst include oxides containing at least one element selected from alkali metals and at least one element selected from Zr, Si, Al, and Ti. The above oxides are preferred also because they can be believed to reduce the elution of the alkali metal and thus prevent the incentive for decomposition of the zeolite.

More specifically, the oxide can be represented by a general formula of $A_{2X}Zr_XSi_YO_{3X+2Y}$, $A_XAl_XSi_YO_{2X+2Y}$, $A_{2X}Ti_XSi_YO_{3X+2Y}$, $A_{2X}Ti_YO_{X+2Y}$, $A_{2X}ZrYO_{X+2Y}$, $A_XAl_YO_{X/2+3Y/2}$ or so on. In the formula, A represents an alkali metal, X represents a positive real number satisfying $1 \leq X \leq 2$, and Y represents a positive real number satisfying $1 \leq Y \leq 6$. More preferably, Y is a positive real number satisfying $1 \leq Y \leq 4$. Examples of the alkali metal include Li, Na, K, Rb, Cs, and Fr. Preferred among them are Li, Na, K, and Cs because of their economic advantage.

Examples of $A_{2X}Zr_XSi_YO_{3X+2Y}$ that can cited include $Li_2ZrSiO_5$, $Na_2ZrSiO_5$, $Na_4Zr_2Si_3O_{12}$, $Na_2ZrSi_2O_7$, $Na_2ZrSi_3O_9$, $K_2ZrSiO_5$, $K_2ZrSi_2O_7$, $K_2ZrSi_3O_9$, $Cs_4Zr_2Si_3O_{12}$, $Cs_2ZrSi_2O_7$, and $Cs_2ZrSi_3O_9$.

Examples of $A_XAl_XSi_YO_{2X+2Y}$ that can cited include $LiAlSiO_4$, $LiAlSi_2O_6$, $LiAlSi_3O_8$, $NaAlSiO_4$, $NaAlSi_2O_6$, $NaAlSi_3O_8$, $KAlSiO_4$, $KAlSi_2O_6$, and $KAlSi_3O_8$.

Examples of $A_{2X}Ti_XSi_YO_{3X+2Y}$ that can cited include $Li_2TiSiO_5$, $Li_2TiSi_2O_7$, $Li_2TiSi_3O_9$, $Na_2TiSiO_5$, $Na_2TiSi_2O_7$, $Na_2TiSi_3O_9$, $K_2TiSiO_5$, $K_2TiSi_2O_7$, and $K_2TiSi_3O_9$.

Examples of $A_{2X}Ti_YO_{X+2Y}$ that can be cited include $Na_2TiO_3$, $Na_2Ti_2O_5$, $Na_2Ti_4O_9$, $Na_2Ti_6O_{13}$, $Na_2Ti_8O_{17}$, $K_2TiO_3$, $K_2Ti_2O_5$, $K_2Ti_4O_9$, $K_2Ti_6O_{13}$, and $K_2Ti_8O_{17}$.

Examples of $A_{2X}Zr_YO_{X+2Y}$ that can be cited include $Na_2ZrO_3$ and $K_2ZrO_3$.

Examples of $A_XAl_YO_{X/2+3Y/2}$ that can be cited include $NaAlO_2$, $NaAl_5O_8$, $KAlO_2$, and $KAl_5O_8$.

Preferably, the oxide for use in the present invention is $A_{2X}Zr_XSi_YO_{3X+2Y}$, $A_XAl_XSi_YO_{2X+2Y}$, $A_{2X}Ti_XSi_YO_{3X+2Y}$ or $A_{2X}Ti_YO_{X+2Y}$.

The mixture is formed into a green body to provide a honeycomb structure, for example, using an extruder, one of two end openings of each cell of the honeycomb structure is sealed so that the cell end openings at each end of the honeycomb structure give a checkered pattern, and the obtained green body is then fired, so that a sintered body can be prepared. The firing conditions are appropriately selected depending on the raw material particles of the support used. When aluminum titanate is used as the raw material particles of the support, examples of the firing temperature are 900 to 1100°C and examples of the firing time are 2 to 15 hours.

The above alkali treatment can be implemented by treating the sintered body with an alkaline solution at pH 9.5 or more in which an alkali and a solvent are mixed. Examples of the alkali that can be used include sodium hydroxide, sodium carbonate, sodium silicate, potassium hydroxide, and potassium carbonate, and sodium silicate is particularly preferred. Two or more of them may be used in combination as necessary.

Examples of the solvent that can be used include water; alcohols, such as methanol, ethanol, propanol, and butanol; and mixed solvents of them and water is preferred because of its high versatility. Examples of a treatment method for alkali treatment that can be used include impregnation, spraying, and the flow method and impregnation is preferred. The treatment temperature of the alkali treatment is preferably 25 to 130°C and more preferably 50 to 100°C. The treatment time of the alkali treatment is preferably 0.5 to 36 hours. The amount of alkali mixed is an amount providing an alkaline solution at pH 9.5 or more, preferably pH 9.5 or more and 13.5 or less, and more preferably pH 10.0 or more and 12.0 or less.

Zeolite is characterized by having microscopic pores in its crystal and the pores serve as a source of various functional capabilities of zeolite. However, when a support obtained by mixing zeolite with various compounds and forming the mixture is fired, there arises a problem that dealuminized and decrystallized substances occlude some of the pores on the zeolite surface to block inherent characteristics of zeolite from being brought out. It can be assumed that the treatment of the body with an alkaline solution at pH 9.5 or more after being fired enables the removal of the decrystallized portion and thus enables the inherent functional capabilities of zeolite to be brought out.

After the alkali treatment, by exchanging an element present at ion-exchange sites of zeolite contained in the sintered body with a transition metal, an exhaust gas purifying filter according to the present invention can be produced.

The method for exchanging the element is not particularly limited except that the element at the ion-exchange sites can be exchanged with a transition metal. For example, the ion exchange method can be adopted. Furthermore, the amount of element exchanged with transition metal can be appropriately selected depending on the desired catalytic activity and some or all of the elemental ions can be used by exchanging them with the transition metal.

Examples of the element at the ion-exchange sites of zeolite include H, $NH_4$, K, and Na.

Examples of the transition metal include Cu, Fe, Pt, Ag, Ti, Mn, Ni, Co, Pd, Rh, V, and Cr and the preferred transition metals are Fe and Cu. Examples of a raw material for use in the exchange with the transition metal include nitrates and acetates of the transition metal. The total amount of transition metal is preferably 1 to 15% by mass and more preferably 1 to 8% by mass relative to the total mass of zeolite.

Furthermore, in order to enhance the catalytic function, a PM combustion catalyst or an SCR catalyst can be appropriately supported on the honeycomb without increasing the pressure loss. Particularly, the supporting of an SCR catalyst is preferred because NOx can be removed by reduction with higher efficiency. The amount of the catalyst supported is preferably 1 to 15 parts by mass relative to the honeycomb structure and a larger amount of the catalyst supported may present a problem that the pressure loss abruptly increases.

Exhaust gases to be treated in the present invention include exhaust gases discharged from internal combustion engines, such as diesel engines and gasoline engines, and exhaust gases from various combustion facilities.

An exhaust gas purifying filter according to the present invention can be produced in accordance with the above method for producing an exhaust gas purifying filter according to the present invention. The exhaust gas purifying filter according to the present invention is placed in a flow path of exhaust gases and thus used in contact with the exhaust gases. The removal of NOx in the exhaust gases is performed in the presence of a reductant, for example, an ammonia precursor, such as urea, ammonium carbonate, hydrazine or ammonium hydrogen carbonate, or ammonia itself. The reductant may be located upstream of the exhaust gas purifying filter of the present invention in the flow path of exhaust gases and supplied by a necessary amount as appropriate.

The exhaust gas purifying filter according to the present invention has a high NOx reduction efficiency and can be produced in a simple manner. In the production, a catalyst capable of combusting PM can be incorporated into the raw material mixture. Thus, the exhaust gas purifying filter according to the present invention can achieve, with a single filter, both the combustion of PM, which is a toxic substance in exhaust gases, at low temperatures and the removal of NOx by reduction. The exhaust gas purifying filter according to the present invention, because of its excellent functions, can be suitably used as a filter for a diesel engine (DPF), a filter for a gasoline engine or the like and can respond to the request for downsizing from the market.

(Exhaust Gas Purification Device)

An exhaust gas purification device according to the present invention includes the above-described exhaust gas purifying filter according to the present invention. The exhaust gas purification device further includes, in addition to the exhaust gas purifying filter according to the present invention, for example, a means of supplying a reductant or the like to the exhaust gas purifying filter. Furthermore, when the exhaust gas purifying filter according to the present invention contains a catalyst capable of combusting PM, the exhaust gas purification device further includes a means of applying heat to the exhaust gas purifying filter in order to decompose deposited PM, and so on.

Examples

The present invention will be described below in further detail with reference to examples. The present invention is not at all limited by the following examples and modifications and variations may be appropriately made therein without changing the gist of the invention.

[Zeolite]

(Synthesis Example 1)

A 1000 ml of 10% by mass copper acetate aqueous solution and 400 g of ZSM-5 zeolite (HSZ-840NHA manufactured by Tosoh Corporation) were mixed and the mixture was stirred at 60°C for 12 hours to prepare a slurry. The solid content of the prepared slurry was filtered out, rinsed in 1000 ml of ion-exchanged water, and then dried at 110°C for six hours.

The resultant particulate solid was measured by X-ray fluorescence, so that it was confirmed that ion-exchange sites of zeolite were ion-exchanged with copper. The resultant zeolite was used in Example 16 and Comparative Example 3.

[Oxide]

(Synthesis Example 2)

An amount of 32.3 parts by mass of sodium carbonate, 31.1 parts by mass of aluminum oxide, and 36.6 parts by mass of silicon oxide were mixed and the mixture was fired at 1200°C for four hours. The resultant particulate solid was confirmed to be single-phase $NaAlSiO_4$ by X-ray diffractometry.

[Production of Exhaust Gas Purifying Filter]

(Example 1)

Compounded into 20 parts by mass of ZSM-5 zeolite (HSZ-840NHA manufactured by Tosoh Corporation) were 80 parts by mass of aluminum titanate (manufactured by MARUSU GLAZE, Co., Ltd.), 10 parts by mass of $NaAlSiO_4$ produced in Synthesis Example 2, 3 parts by mass of graphite, 10 parts by mass of methylcellulose, and 0.5 parts by mass of fatty acid soap. A suitable amount of water was also added to the mixture and the mixture was then kneaded to obtain an extrudable clay.

The obtained clay was extruded and formed into a honeycomb structure by an extruder to obtain a green body. The cell density of the die was 300 cells/sq.in. (46.5 cells/cm$^2$) and the partition thickness was 300 $\mu$m.

A slurry was prepared the solid of which was substantially made of particles of the above-mentioned particulate aluminum titanate and the above-mentioned zeolite and to which an additive, such as a viscosity modifier, was added. The ratio of the solid in the slurry is the same as described above. This slurry was applied in some of the cells of the green body having a honeycomb structure to seal some of the cell openings so that the open cells and sealed cells of the honeycomb structure gave a checkered pattern.

The resultant green body was fired by holding it at 600°C for 10 hours, then raising the temperature to 1000°C at a rate of 25°C/h, and holding it at 1000°C for 10 hours, resulting in a honeycomb structure with a pore diameter of 11 $\mu$m and a porosity of 48%.

The resultant honeycomb structure was impregnated with a sodium silicate aqueous solution controlled at pH 10.0, held at 80°C for 24 hours, then rinsed well in running water, and dried at 60°C.

Next, the honeycomb structure was impregnated with a 10% by mass copper acetate aqueous solution and held at 60°C for 12 hours. Thereafter, the honeycomb structure was rinsed well in ion-exchanged water and heated at 600°C for two hours to produce an exhaust gas purifying filter.

(Example 2)

An exhaust gas purifying filter was produced in the same manner as in Example 1 except that the sodium silicate aqueous solution controlled at pH 10.0 was changed to a sodium silicate aqueous solution controlled at pH 11.0.

(Example 3)

An exhaust gas purifying filter was produced in the same manner as in Example 1 except that the sodium silicate aqueous solution controlled at pH 10.0 was changed to a sodium silicate aqueous solution controlled at pH 12.0.

(Example 4)

The production was made in the same manner as in Example 1 except that the sodium silicate aqueous solution controlled at pH 10.0 was changed to a sodium hydroxide aqueous solution controlled at pH 10.0.

(Example 5)

An exhaust gas purifying filter was produced in the same manner as in Example 1 except that the sodium silicate aqueous solution controlled at pH 10.0 was changed to a potassium hydroxide aqueous solution controlled at pH 10.0.

(Example 6)

An exhaust gas purifying filter was produced in the same manner as in Example 1 except that $NaAlSiO_4$ produced in Synthesis Example 2 was changed to TISMO-N (manufactured by Otsuka Chemical Co., Ltd.).

(Example 7)

An exhaust gas purifying filter was produced in the same manner as in Example 1 except that $NaAlSiO_4$ produced in Synthesis Example 2 was changed to TISMO-N (manufactured by Otsuka Chemical Co., Ltd.) and that the sodium silicate aqueous solution controlled at pH 10.0 was changed to a sodium silicate aqueous solution controlled at pH 11.0.

(Example 8)

An exhaust gas purifying filter was produced in the same manner as in Example 1 except that $NaAlSiO_4$ produced in Synthesis Example 2 was changed to TISMO-N (manufactured by Otsuka Chemical Co., Ltd.) and that the sodium silicate aqueous solution controlled at pH 10.0 was changed to a sodium silicate aqueous solution controlled at pH 12.0.

(Example 9)

An exhaust gas purifying filter was produced in the same manner as in Example 1 except that $NaAlSiO_4$ produced in Synthesis Example 2 was changed to TISMO-N (manufactured by Otsuka Chemical Co., Ltd.) and that the sodium silicate aqueous solution controlled at pH 10.0 was changed to a sodium hydroxide aqueous solution controlled at pH 10.0.

(Example 10)

An exhaust gas purifying filter was produced in the same manner as in Example 1 except that $NaAlSiO_4$ produced in Synthesis Example 2 was changed to TISMO-N (manufactured by Otsuka Chemical Co., Ltd.) and that the sodium silicate aqueous solution controlled at pH 10.0 was changed to a potassium hydroxide aqueous solution controlled at pH 10.0.

(Example 11)

An exhaust gas purifying filter was produced in the same manner as in Example 1 except that $NaAlSiO_4$ produced in Synthesis Example 2 was changed to TISMO-D (manufactured by Otsuka Chemical Co., Ltd.).

(Example 12)

An exhaust gas purifying filter was produced in the same manner as in Example 1 except that $NaAlSiO_4$ produced in Synthesis Example 2 was changed to TISMO-D (manufactured by Otsuka Chemical Co., Ltd.) and that the sodium silicate aqueous solution controlled at pH 10.0 was changed to a sodium silicate aqueous solution controlled at pH 11.0.

(Example 13)

An exhaust gas purifying filter was produced in the same manner as in Example 1 except that $NaAlSiO_4$ produced in Synthesis Example 2 was changed to TISMO-D (manufactured by Otsuka Chemical Co., Ltd.) and that the sodium silicate aqueous solution controlled at pH 10.0 was changed to a sodium silicate aqueous solution controlled at pH 12.0.

(Example 14)

An exhaust gas purifying filter was produced in the same manner as in Example 1 except that $NaAlSiO_4$ produced in Synthesis Example 2 was changed to TISMO-D (manufactured by Otsuka Chemical Co., Ltd.) and that the sodium silicate aqueous solution controlled at pH 10.0 was changed to a sodium hydroxide aqueous solution controlled at pH 10.0.

(Example 15)

An exhaust gas purifying filter was produced in the same manner as in Example 1 except that $NaAlSiO_4$ produced in Synthesis Example 2 was changed to TISMO-D (manufactured by Otsuka Chemical Co., Ltd.) and that the sodium silicate aqueous solution controlled at pH 10.0 was changed to a potassium hydroxide aqueous solution controlled at pH 10.0.

(Example 16)

Compounded into 20 parts by mass of ZSM-5 zeolite (HSZ-840NHA manufactured by Tosoh Corporation) were 80 parts by mass of aluminum titanate (manufactured by MARUSU GLAZE, Co., Ltd.), 10 parts by mass of $NaAlSiO_4$ produced in Synthesis Example 2, 3 parts by mass of graphite, 10 parts by mass of methylcellulose, and 0.5 parts by mass of fatty acid soap. A suitable amount of water was also added to the mixture and the mixture was then kneaded to obtain an extrudable clay.

The obtained clay was extruded and formed into a honeycomb structure by an extruder to obtain a green body. The cell density of the die was 300 cells/sq.in. (46.5 cells/cm$^2$) and the partition thickness was 300 $\mu$m.

A slurry was prepared the solid of which was substantially made of particles of the above-mentioned particulate aluminum titanate and the above-mentioned zeolite and to which an additive, such as a viscosity modifier, was added. The ratio of the solid in the slurry is the same as described above. This slurry was applied in some of the cells of the green body having a honeycomb structure to seal some of the cell openings so that the open cells and sealed cells of the honeycomb structure gave a checkered pattern.

The resultant green body was fired by holding it at 600°C for 10 hours, then raising the temperature to 1000°C at a rate of 25°C/h, and holding it at 1000°C for 10 hours, resulting in a honeycomb structure with a pore diameter of 11 $\mu$m and a porosity of 48%.

The resultant honeycomb structure was impregnated with a sodium silicate aqueous solution controlled at pH 10.0, held at 80°C for 24 hours, then rinsed well in running water, and dried at 60°C.

Next, the honeycomb structure after having been subjected to the alkali treatment was impregnated with a 10% by mass copper acetate aqueous solution and held at 60°C for 12 hours. Thereafter, the honeycomb structure was rinsed well in ion-exchanged water and heated at 600°C for two hours.

Next, 40 parts by mass of zeolite produced in Synthesis Example 1 was mixed with 20 parts by mass of silica sol and 40 parts by mass of water to prepare a slurry. An end of the honeycomb structure having been subjected to the above treatment was impregnated with the prepared slurry and the slurry was sucked from the surface of the opposite end of the honeycomb structure, so that zeolite was supported on the honeycomb structure. After the supporting, the honeycomb structure was fired at 600°C to 700°C for about four hours to produce an exhaust gas purifying filter.

The amount of zeolite supported on the honeycomb structure was 10 parts by mass relative to 90 parts by mass of aluminum titanate.

(Comparative Example 1)

An exhaust gas purifying filter was produced in the same manner as in Example 1 except that the sodium silicate aqueous solution controlled at pH 10.0 was changed to a sodium silicate aqueous solution controlled at pH 9.0.

(Comparative Example 2)

Compounded into 20 parts by mass of ZSM-5 zeolite (HSZ-840NHA manufactured by Tosoh Corporation) were 80 parts by mass of aluminum titanate (manufactured by MARUSU GLAZE, Co., Ltd.), 10 parts by mass of $NaAlSiO_4$ produced in Synthesis Example 2, 3 parts by mass of graphite, 10 parts by mass of methylcellulose, and 0.5 parts by mass of fatty acid soap. A suitable amount of water was also added to the mixture and the mixture was then kneaded to obtain an extrudable clay.

The obtained clay was extruded and formed into a honeycomb structure by an extruder to obtain a green body. The cell density of the die was 300 cells/sq.in. (46.5 cells/cm$^2$) and the partition thickness was 300 $\mu$m.

A slurry was prepared the solid of which was substantially made of particles of the above-mentioned particulate aluminum titanate and the above-mentioned zeolite and to which an additive, such as a viscosity modifier, was added. The ratio of the solid in the slurry is the same as described above. This slurry was applied in some of the cells of the green body having a honeycomb structure to seal some of the cell openings so that the open cells and sealed cells of the honeycomb structure gave a checkered pattern.

The resultant green body was fired by holding it at 600°C for 10 hours, then raising the temperature to 1000°C at a rate of 25°C/h, and holding it at 1000°C for 10 hours, resulting in a honeycomb structure with a pore diameter of 11 $\mu$m and a porosity of 48%.

The resultant honeycomb structure was impregnated with a 10% by mass copper acetate aqueous solution and held at 60°C for 12 hours. Thereafter, the honeycomb structure was rinsed well in ion-exchanged water and heated at 600°C for two hours to produce an exhaust gas purifying filter.

(Comparative Example 3)

An amount of 90 parts by mass of aluminum titanate (manufactured by MARUSU GLAZE, Co., Ltd.), 10 parts by mass of graphite, 10 parts by mass of methylcellulose, and 0.5 parts by mass of fatty acid soap were compounded, a suitable amount of water was also added to the mixture, and the mixture was then kneaded to obtain an extrudable clay.

The obtained clay was extruded and formed into a honeycomb structure by an extruder to obtain a green body. The cell density of the die was 300 cells/sq.in. (46.5 cells/cm$^2$) and the partition thickness was 300 $\mu$m.

A slurry was prepared the solid of which was substantially made of particles of the above-mentioned particulate aluminum titanate and to which an additive, such as a viscosity modifier, was added. The ratio of the solid in the slurry is the same as described above. This slurry was applied in some of the cells of the green body having a honeycomb structure to seal some of the cell openings so that the open cells and sealed cells of the honeycomb structure gave a checkered pattern.

The resultant green body was fired by holding it at 600°C for 10 hours, then raising the temperature to 1450°C at a rate of 25°C/h, and holding it at 1450°C for 10 hours, resulting in a honeycomb structure with a pore diameter of 12 $\mu$m and a porosity of 51%.

Next, 40 parts by mass of zeolite produced in Synthesis Example 1 was mixed with 20 parts by mass of silica sol and 40 parts by mass of water to prepare a slurry. The honeycomb structure was immersed into the prepared slurry. After the immersion, the honeycomb structure was fired at 600°C to 700°C for about four hours to produce an exhaust gas purifying filter.

The amount of zeolite supported on the honeycomb structure was 19 parts by mass relative to 90 parts by mass of aluminum titanate.

[Evaluation of Exhaust Gas Purification Device]

(Evaluation on NOx Concentration)

After each exhaust gas purifying filter was previously immersed into a urea aqueous solution and then dried at 50°C, it was placed in an exhaust line for simulant exhaust gases. Thereafter, the simulant exhaust gases (O$_2$: 10%, N$_2$: 90%, NO: 200 ppm, NO$_2$: 200 ppm) were raised to 300°C and measured in terms of NOx concentration. The results are shown in Table 1.

(Evaluation on Pressure Loss due to Deposited PM)

After the initial weight of each exhaust gas purifying filter was previously measured, an oxidation catalyst (DOC) and the exhaust gas purifying filter were placed in this order in an exhaust line of a diesel engine. Subsequently, the diesel engine was started, a specific amount (approximately 4 g/L) of PM was deposited on the filter at low temperatures, then the exhaust gas purifying filter was removed from the exhaust line, the weight of PM deposited was confirmed, and then the exhaust gas purifying filter was measured in terms of pressure loss. The results are shown in Table 1.

(Filter Regeneration Rate)

After the initial weight of each exhaust gas purifying filter was previously measured, an oxidation catalyst (DOC) and the exhaust gas purifying filter were placed in this order in an exhaust line of a diesel engine. Subsequently, the diesel engine was started, a specific amount (approximately 8 g/L) of PM was deposited on the filter at low temperatures, then the exhaust gas purifying filter was once removed from the exhaust line, and the weight of PM deposited was measured.

Next, the exhaust gas purifying filter was placed in the exhaust line for the simulant exhaust gases, then the simulant exhaust gases were raised to 540°C, and a regeneration test was started. For 30 minutes after the simulant exhaust gases reached 540°C, they were held at a temperature of 540°C $\pm$ 10°C. After a lapse of 30 minutes, the total amount of the simulant gases was changed to N2.

After the temperature dropped to room temperature, the exhaust gas purifying filter was removed again and its weight reduction (i.e., the weight of PM combusted) was measured.

The regeneration rate was calculated from the calculation formula below. The results are shown in Table 2.

$$\text{Regeneration rate (\%)} = 100 - [(\text{weight of PM deposited (g)}$$

$$- \text{weight of PM combusted (g)})/\text{weight of PM deposited (g)}] \times 100.$$

[Table 1]

|  | Evaluation on NOx Concentration | Evaluation on Pressure Loss due to Deposited PM |
|---|---|---|
| Ex. 1 | 50ppm | 1.8kPa |
| Ex. 2 | 48ppm | 1.8kPa |
| Ex. 3 | 42ppm | 1.7kPa |
| Ex. 4 | 70ppm | 1.8kPa |
| Ex. 5 | 74ppm | 1.8kPa |
| Ex.6 | 50ppm | 1.5kPa |
| Ex. 7 | 48ppm | 1.5kPa |
| Ex. 8 | 41ppm | 1.5kPa |
| Ex. 9 | 68ppm | 1.5kPa |
| Ex. 10 | 72ppm | 1.5kPa |
| Ex. 11 | 48ppm | 1.6kPa |
| Ex. 12 | 46ppm | 1.6kPa |
| Ex. 13 | 39ppm | 1.6kPa |
| Ex. 14 | 65ppm | 1.6kPa |
| Ex. 15 | 70ppm | 1.6kPa |
| Ex. 16 | 8ppm | 2.3kPa |
| Comp.Ex.1 | 280ppm | 1.9kPa |
| Comp.Ex.2 | 310ppm | 1.9kPa |
| Comp.Ex.3 | 75ppm | 3.5kPa |

[Table 2]

|  | Filter Regeneration Rate |
|---|---|
| Ex. 1 | 68% |
| Ex. 2 | 68% |
| Ex. 3 | 69% |
| Ex. 4 | 67% |
| Ex. 5 | 67% |
| Ex. 6 | 68% |
| Ex. 7 | 68% |
| Ex. 8 | 69% |
| Ex. 9 | 68% |
| Ex. 10 | 67% |
| Ex. 11 | 67% |
| Ex. 12 | 68% |
| Ex. 13 | 68% |
| Ex. 14 | 67% |
| Ex. 15 | 67% |

(continued)

| | Filter Regeneration Rate |
|---|---|
| Ex. 16 | 67% |
| Comp. Ex.1 | 66% |
| Comp. Ex.2 | 66% |

As is obvious from the results shown in Table 1, with the use of the exhaust gas purifying filters of Examples 1 to 15 according to the present invention, the NOx concentration was reduced and the pressure loss was kept low. In contrast, with the use of the exhaust gas purifying filters of Comparative Examples 1 and 2 in which no alkali treatment under a condition of pH 9.5 or more was carried out, the NOx concentration became high. Furthermore, in Comparative Example 3 in which zeolite was supported by immersion, the NOx concentration was low but the pressure loss was large. With the use of the exhaust gas purifying filter of Example 16, the pressure loss was slightly increased but kept well down and the NOx concentration could be significantly reduced.

## Claims

1. A method for producing an exhaust gas purifying filter, the method comprising the steps of:

   extruding a mixture containing zeolite and raw material particles of a support to prepare a green body;
   firing the green body to prepare a sintered body;
   treating the sintered body with alkali under a condition at pH 9.5 or more; and
   exchanging an element at an ion-exchange site of the zeolite contained in the alkali-treated sintered body with a transition metal.

2. The method for producing an exhaust gas purifying filter according to claim 1, wherein the zeolite is contained as a catalyst capable of reducing nitrogen oxides to nitrogen.

3. The method for producing an exhaust gas purifying filter according to claim 1 or 2, wherein the zeolite is at least one selected from mordenite zeolite, faujasite zeolite, zeolite A, zeolite L, zeolite $\beta$, and ZSM-5 zeolite.

4. The method for producing an exhaust gas purifying filter according to any one of claims 1 to 3, wherein the raw material particles of the support are aluminum titanate.

5. The method for producing an exhaust gas purifying filter according to any one of claims 1 to 4, wherein the green body is a green body of a honeycomb filter.

6. An exhaust gas purifying filter produced by the method for producing an exhaust gas purifying filter according to any one of claims 1 to 5.

7. An exhaust gas purification device comprising the exhaust gas purifying filter according to claim 6.

<div align="center">

**INTERNATIONAL SEARCH REPORT**

</div>

| International application No. |
|---|
| PCT/JP2016/067672 |

**A. CLASSIFICATION OF SUBJECT MATTER**
*B01J37/04*(2006.01)i, *B01D53/94*(2006.01)i, *B01J29/46*(2006.01)i, *B01J37/00*
(2006.01)i, *B01J37/08*(2006.01)i, *B01J37/30*(2006.01)i, *F01N3/022*(2006.01)i,
*F01N3/035*(2006.01)i
According to International Patent Classification (IPC) or to both national classification and IPC

**B. FIELDS SEARCHED**

Minimum documentation searched (classification system followed by classification symbols)
B01J21/00-38/74, B01D53/86, 53/94

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)
JSTPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-33273 A (Toyota Motor Corp.), 02 February 2000 (02.02.2000), claims 1, 2; 0011, 0014, 0016 (Family: none) | 1-7 |
| Y | JP 2011-201115 A (NGK Insulators, Ltd.), 13 October 2011 (13.10.2011), claims; 0120 & US 2011/0236625 A1 claims; 0152 & EP 2368633 A1 | 1-7 |
| P,A | Sakae KATO et al., "Preparation of Zeolites included Rare-earth oxides as a catalyst for carbon oxidation", Industrial Technology Center of Tochigi Prefecture Kenkyu Hokoku, 2015.08, no.12, pages 24 to 28 | 1-7 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 June 2016 (30.06.16) | 12 July 2016 (12.07.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013136991 A
- JP 2000282852 A
- WO 2012046577 A